# FASCICULE DE BREVET EUROPEEN

(11) **EP 2 721 487 B1**
(45) Date de publication et mention de la délivrance du brevet: **18.11.2020**
(21) Numéro de dépôt: 12731123.1
(22) Date de dépôt: 06.06.2012
(51) Int. Cl.: G06F 8/65

(54) **PROCEDE, DISPOSITIF ET PROGRAMME D'ORDINATEUR POUR LA MISE À JOUR LOGICIELLE DE CLUSTERS OPTIMISANT LA DISPONIBILITE DE CES DERNIERS**
VERFAHREN, VORRICHTUNG UND COMPUTERPROGRAMM ZUR AKSOFTWARE TUALISIERUNG VON CLUSTERN UM DIE VERFÜGBARKEIT DIESER ZU OPTIMIEREN
METHOD, APPARATUS AND COMPUTER PROGRAM FOR SOFTWARE UPDATE OF CLUSTERS TO OPTIMISE THE AVAILABILITY OF THESE

(30) Priorité: 17.06.2011 FR 1155317
(43) Date de publication de la demande: 23.04.2014
(73) Titulaire: Bull SAS, 78340 Les Clayes-sous-Bois (FR)
(72) Inventeur: GERPHAGNON, Jean-Olivier, F-38180 Seyssins (FR); COUVEE, Philippe, F-38190 Villard Bonnot (FR); MARTIN, Stéphane, F-38130 Echirolles (FR)
(74) Mandataire: Santarelli
(86) Numéro de dépôt international: PCT/FR2012/051262
(87) Numéro de publication internationale: WO 2012/172234

(56) Documents cités:
- EP-A1- 2 131 282
- WO-A2-2010/022100
- US-A1- 2009 007 135
- US-A1- 2010 020 806
- Po-Chun Shi-Ming Huang Huang ET AL: "Component-based software version management based on a Component-Interface Dependency Matrix", The Journal of Systems & Software, 1 January 2009 (2009-01-01), pages 382-399, XP055562236, New York DOI: 10.1016/j.jss.2008.06.052 Retrieved from the Internet: URL:http://citeseerx.ist.psu.edu/viewdoc/d ownload;jsessionid=E2F4D7DAD28C12E572C41FB CE8CCD647?doi=10.1.1.2.4916&rep=rep1&type= pdf

## Description

La présente invention concerne la maintenance de clusters et plus particulièrement un procédé, un dispositif et un programme d'ordinateur pour la mise à jour logicielle de clusters optimisant la disponibilité de ces derniers. La demande européenne de brevet publiée EP2131282A1 divulgue des techniques pour mettre à jour des logiciels dans un cluster en sélectionnant les équipements inutilisés dans ledit cluster afin de les mettre à jour sans interrompre les services fournis par le cluster.

La demande internationale de brevet publiée WO20100221 00A3 divulgue la division d'un cluster en un premier cluster et un second cluster afin de mettre à jour les équipements du premier cluster puis de les migrer vers le second cluster.La demande américaine de brevet publiée US2009007135A1 divulgue la mise à jour d'applications dans un cluster de processeurs qui est divisé en un premier et un second groupe de processeurs, dans lequel le premier groupe est isolé des clients et du second cluster par des filtres IP. Après la mise à jour et mise en service du premier groupe, le second groupe est isolé des clients et du premier groupe pour être mis à jour à son tour.

Le calcul haute performance, aussi appelé HPC (sigle de *High Performance Computing* en terminologie anglo-saxonne) se développe pour la recherche universitaire comme pour l'industrie, notamment dans des domaines techniques tels que l'automobile, l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en oeuvre sur des systèmes de traitement de données appelés clusters. Un cluster comprend typiquement un ensemble de noeuds interconnectés. Certains nœuds sont utilisés pour effectuer des tâches de calcul (nœuds de calcul), d'autres pour stocker des données (nœuds de stockage) et un ou plusieurs autres gèrent le cluster (nœuds d'administration). Chaque nœud est par exemple un serveur mettant en œuvre un système d'exploitation tel que Linux (Linux est une marque). La connexion entre les nœuds est, par exemple, réalisée à l'aide de liens de communication Ethernet et de réseaux d'interconnexions (par exemple Infiniband) (Ethernet et Infiniband sont des marques).

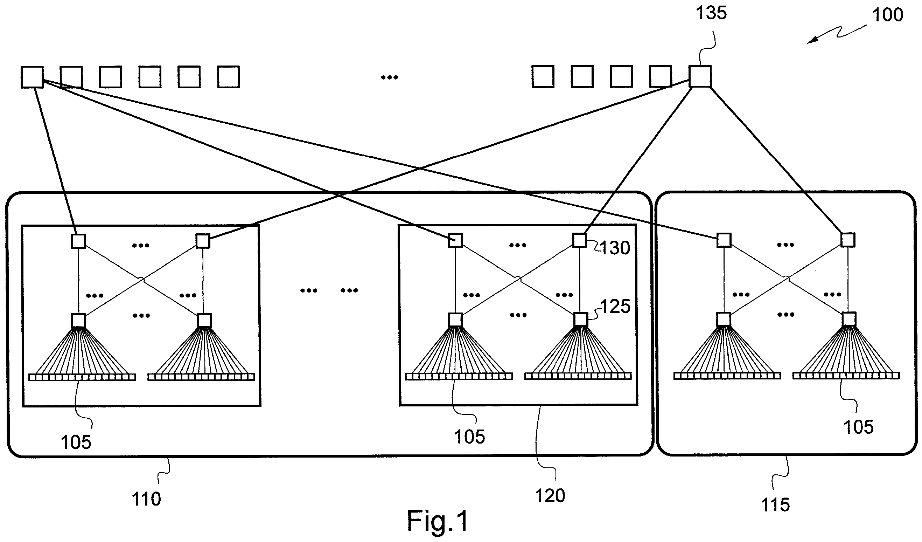

La figure 1 illustre schématiquement un exemple d'une topologie 100 d'un cluster, de type *fat-tree.* Ce dernier comprend un ensemble de nœuds génériquement référencés 105. Les nœuds appartenant à l'ensemble 110 sont ici des nœuds de calcul tandis que les nœuds de l'ensemble 115 sont des nœuds de service (nœuds de stockage et nœuds d'administration). Les nœuds de calcul peuvent être regroupés en sous-ensembles 120 appelés îlots de calcul, l'ensemble 115 étant appelé îlot de service.

Les nœuds sont reliés les uns aux autres par des commutateurs (appelés *switch* en terminologie anglo-saxonne), par exemple de façon hiérarchique. Dans l'exemple illustré sur la figure 1, les nœuds sont connectés à des commutateurs 125 de premier niveau qui sont eux-mêmes reliés à des commutateurs 130 de deuxième niveau qui sont à leur tour reliés à des commutateurs 135 de troisième niveau.

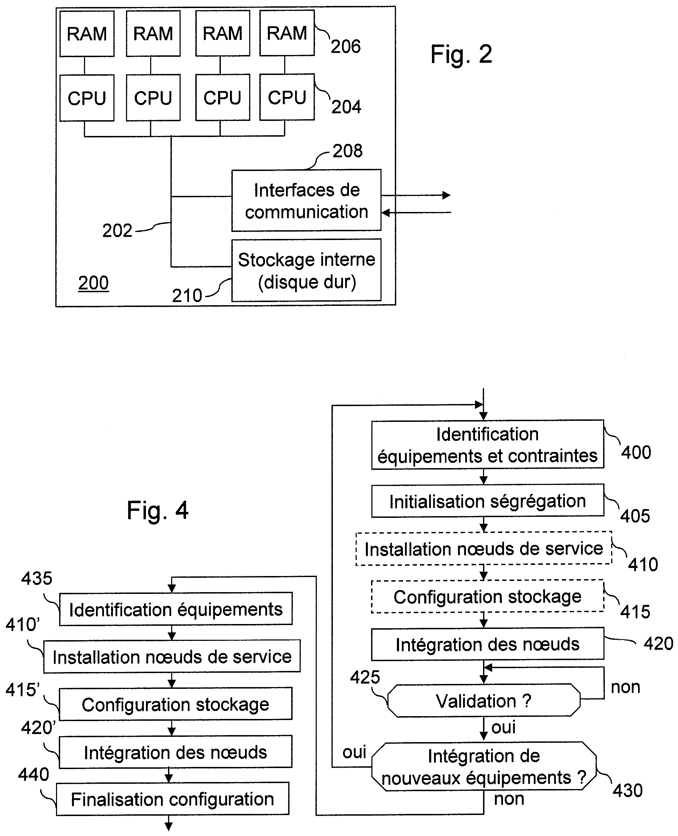

Comme illustré sur la figure 2, chaque nœud comprend généralement un ou plusieurs microprocesseurs, des mémoires locales ainsi qu'une interface de communication. Plus précisément, le nœud 200 comporte ici un bus de communication 202 auquel sont reliés :
- des unités centrales de traitement ou microprocesseurs 204 (ou CPU, sigle de *Central Processing Unit en* terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive peut être associé à un microprocesseur) ; et,
- des interfaces de communication 208 adaptées à transmettre et à recevoir des données.

Le nœud 200 dispose en outre ici de moyens de stockage interne 212, tels que des disques durs, pouvant notamment comporter le code exécutable de programmes.

Le bus de communication permet la communication et l'interopérabilité entre les différents éléments inclus dans le nœud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Quelque soit la taille d'un cluster, il est nécessaire, durant son exploitation, de mettre à jour certains de ces composants, notamment des éléments logiciels de ces composants.

Lorsque ces mises à jour n'ont pas d'influence notable sur la fiabilité ou stabilité du cluster, elles peuvent être réalisées de manière quasi transparente pour l'utilisateur. De telles mises à jour sont fréquemment appelées des *updates* ou *fixes.* Ces *updates* ou *fixes* sont fournis au titre du support d'une version majeure d'une couche logicielle utilisée dans un cluster.

Inversement, d'autres mises à jour peuvent nécessiter une réinstallation totale de l'environnement. Il s'agit en général d'une ou plusieurs modifications technologiques majeures entraînant une mise à jour quasi totale de l'environnement de base, c'est-à-dire du système d'exploitation ou de la couche applicative dédiée à la gestion du cluster mis en oeuvre dans tous les nœuds (ou certains).

Ainsi, pour de simples mises à jour, celles-ci peuvent être réalisées de manière relativement transparente sur un cluster en production ou en exploitation, c'est-à-dire en utilisation, ou, à défaut, dans des délais de maintenance relativement courts. Par contre, concernant les mises à jour majeures, celles-ci nécessitent, par défaut, un arrêt total de l'exploitation du cluster durant toute la procédure de mise à jour qui peut être très longue. En d'autres termes, une mise à jour majeure pénalise aujourd'hui lourdement l'exploitation des clusters. En outre, ce type de mise à jour présente un risque difficilement maîtrisé dans le cadre de grands clusters où une réinstallation totale est risquée, complexe et coûteuse.

L'invention permet de résoudre au moins un des problèmes exposés précédemment.

L'invention a ainsi pour objet un procédé de mise à jour logicielle d'éléments dans une pluralité d'équipements d'un cluster pour migrer un cluster initial ayant un état technique logiciel d'un premier niveau vers un cluster final ayant un état technique logiciel d'un second niveau, ledit cluster initial étant scindé en un cluster temporaire de migration et un cluster temporaire de production durant l'exécution du procédé, le procédé comprenant les étapes suivantes,
- identification d'un ensemble d'équipements de ladite pluralité d'équipements, ledit ensemble d'équipements comprenant au moins un équipement ;
- affectation des équipements dudit ensemble d'équipements audit cluster temporaire de migration et mise à jour logicielle d'au moins un élément d'au moins un équipement dudit ensemble d'équipements, ledit cluster temporaire de production comprenant les équipements de ladite pluralité d'équipements à l'exception des équipements de ladite pluralité d'équipements affectés audit cluster temporaire de migration, lesdites clusters temporaires de migration et de production étant logiquement indépendant ;
- test dudit cluster temporaire de migration ; et,
- en réponse à ladite étape de test, si ledit cluster temporaire de migration peut être considéré comme valide, configuration dudit cluster final de production.

Le procédé selon l'invention permet ainsi de limiter l'interruption de service sur un cluster de production lors d'une mise à jour logicielle et assurer la conformité de la nouvelle installation avant de la fournir aux utilisateurs finaux. Le procédé selon l'invention permet en outre de réduire les périodes de maintenance provoquant une interruption de service.

De façon avantageuse, lesdites étapes d'identification d'un ensemble d'équipements, d'affectation d'équipements et de test dudit cluster temporaire de migration sont répétées au moins une fois, de façon itérative, en réponse à ladite étape de test dudit cluster temporaire de migration comprenant les équipements dudit ensemble d'équipements, appelé premier ensemble d'équipements, pour identifier au moins un second ensemble d'équipements, affecter les équipements dudit au moins un second ensemble d'équipements audit cluster temporaire de migration et tester ledit cluster temporaire de migration afin de permettre une migration progressive des équipements du cluster. Le procédé selon l'invention est ainsi particulièrement adapté aux clusters de grande taille, notamment aux clusters ayant des dizaines de milliers d'équipements. Il permet par exemple, dans un cluster comprenant quinze îlots de plus de mille équipements chacun, de migrer initialement cinq îlots, puis deux nouveaux, puis encore trois nouveaux pour au final migrer les cinq derniers tout en limitant l'impact sur l'arrêt de production.

Selon un mode de réalisation particulier, le procédé comprend en outre une étape de vérification de cohérence visant au moins un équipement dudit ensemble d'équipements pour vérifier qu'un équipement de ladite pluralité d'équipements ayant un lien de dépendance avec ledit équipement visé par ladite vérification de cohérence appartient audit ensemble d'équipements, ledit lien de dépendance vérifiant une caractéristique prédéterminée.

De façon avantageuse, le procédé comprend en outre une étape d'ajout audit ensemble d'équipements dudit équipement de ladite pluralité d'équipements ayant un lien de dépendance avec ledit équipement visé par ladite vérification de cohérence si ledit équipement de ladite pluralité d'équipements ayant un lien de dépendance avec ledit équipement visé par ladite vérification de cohérence n'appartient pas audit ensemble d'équipements.

Le procédé selon l'invention permet ainsi de maintenir en cohérence les équipements migrés afin de migrer des équipements et leurs dépendances pour conserver les liens de dépendance dans les clusters temporaires.

Toujours selon un mode de réalisation particulier, le procédé comprend en outre une étape de mise à jour logicielle d'au moins un élément d'au moins un équipement dudit cluster temporaire de production pour configurer ledit cluster final de production. Le procédé selon l'invention permet ainsi de valider une mise à jour dans le cluster temporaire de migration avant d'effectuer cette mise à jour dans un élément du cluster temporaire de production, utilisé dans le cluster final de production.

Toujours selon un mode de réalisation particulier, ladite étape de configuration dudit cluster final de production comprend une étape d'intégration d'au moins un équipement dudit cluster temporaire de production, comprenant au moins un élément mis à jour, dans ledit cluster temporaire de migration, ledit cluster temporaire de migration devenant ledit cluster final de production.

Alternativement, ladite étape de configuration dudit cluster final de production comprend une étape d'intégration d'au moins un équipement dudit cluster temporaire de migration dans ledit cluster temporaire de production, ledit cluster temporaire de production devenant ledit cluster final de production. Un tel mode de réalisation permet d'éviter une reconfiguration d'équipements tiers tels que des commutateurs et des systèmes d'alimentation électrique.

Toujours selon un mode de réalisation particulier, ladite étape d'affectation des équipements dudit ensemble d'équipements audit cluster temporaire de migration comprend une étape de marquage d'un identifiant des équipements dudit ensemble d'équipements dans des données de configuration dudit cluster temporaire de production. Ladite étape d'affectation des équipements dudit ensemble d'équipements audit cluster temporaire de migration comprend alors, de préférence, une étape de démarquage d'un identifiant des équipements dudit ensemble d'équipements dans des données de configuration dudit cluster temporaire de migration. La ségrégation logique entre les clusters temporaires est ainsi particulièrement simple à mettre en œuvre.

Toujours selon un mode de réalisation particulier, le procédé comprend en outre une étape de configuration d'au moins un équipement de gestion dudit cluster temporaire de migration et/ou d'au moins un système de fichiers utilisé pour le stockage, partagé entre ledit cluster temporaire de production et ledit cluster temporaire de migration.

Lesdits équipements dudit ensemble d'équipements sont, par exemple, des noeuds.

L'invention a également pour objet un programme d'ordinateur comprenant des instructions adaptées à la mise en œuvre de chacune des étapes du procédé décrit précédemment lorsque ledit programme est exécuté sur un ordinateur ainsi qu'un dispositif comprenant des moyens adaptés à la mise en œuvre de chacune des étapes du procédé décrit précédemment.

Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple de topologie d'un cluster ;
- la figure 2 illustre un exemple d'architecture d'un nœud d'un cluster ;
- la figure 3, comprenant les figures 3a à 3e, illustre schématiquement la migration d'un cluster initial de production ayant un état technique logiciel d'un premier niveau vers un cluster final de production ayant un état technique logiciel d'un second niveau ; et,
- la figure 4 illustre schématiquement un exemple d'algorithme pour mettre à jour des éléments logiciels d'un cluster, optimisant la disponibilité de ce dernier, conformément à l'invention.

De façon générale, l'invention vise à scinder un cluster de production en deux clusters temporaires, logiquement distincts, lors de la migration de ce cluster initial ayant un état technique logiciel d'un premier niveau vers un cluster final ayant un état technique logiciel d'un second niveau. L'un des deux clusters temporaires résultant de cette scission est dans l'état technique logiciel du cluster initial. Etant disponible et stable conformément au cluster initial, il est dédié à la production, c'est-à-dire à l'utilisation normale du cluster. Il est appelé cluster temporaire de production dans la suite de la description. L'autre cluster temporaire est un cluster temporaire de migration. Ses composants sont, en termes de taille et d'équipements, représentatif du cluster final. Bien que son paramétrage soit similaire à celui du cluster initial, il est dans un état technique logiciel du second niveau pour permettre de tester le cluster dans cet état.

L'invention permet ainsi de conserver un cluster de production lors d'une migration visant la mise en place d'une nouvelle version logicielle.

Des tests sont effectués sur le cluster temporaire de migration afin de valider le second état technique logiciel. Lorsque ce dernier présente des caractéristiques attendues, des éléments du cluster temporaire de production peuvent alors lui être transférés, de façon progressive. Lorsque le cluster temporaire de migration atteint une taille critique, par exemple prédéterminée, par rapport à celle du cluster temporaire de production, ou lorsqu'une condition est remplie, ce dernier est migré dans le cluster temporaire de migration qui devient alors le cluster final. Alternativement, lorsque le cluster temporaire de migration atteint une telle taille critique ou lorsqu'une condition est remplie, il est possible de réinstaller le cluster temporaire de production avec les éléments logiciels et matériels du cluster temporaire de migration.

Schématiquement, la migration d'un cluster initial ayant un premier état technique logiciel vers un cluster final ayant un second état technique logiciel peut comprendre les étapes suivantes :
- identification des nœuds du cluster initial devant être utilisés dans le cluster temporaire de migration. A titre d'illustration, il est possible d'affecter la moitié des nœuds de service du cluster initial au cluster temporaire de migration (l'autre moitié étant utilisée par le cluster temporaire de production) et d'affecter un sous-ensemble représentatif des nœuds de calcul du cluster initial au cluster temporaire de migration (les nœuds de calcul non affectés au cluster temporaire de migration étant utilisés par le cluster temporaire de production) ;
- ségrégation des nœuds affectés au cluster temporaire de migration et des nœuds utilisés par le cluster temporaire de production pour éviter toute perturbation du cluster temporaire de migration sur le cluster temporaire de production ;
- obtention de données et d'informations de configuration du cluster initial devant être utilisé par le cluster temporaire de migration afin de créer un environnement de test conforme à la configuration du cluster initial de production. De telles données et informations sont, par exemple, des bases de données et des fichiers de configuration spécifiques ;
- installation de la partie administrative du cluster temporaire de migration conformément aux caractéristiques, données et informations obtenues précédemment (en vérifiant, de préférence, qu'il n'y ait pas d'interférence avec les équipements du cluster temporaire de production) et validation du fonctionnement des fonctionnalités d'administration du cluster temporaire de migration ;
- installation des nœuds de calcul dans le cluster temporaire de migration et validation du comportement de la partie calcul ainsi installée, par exemple via la soumission de tests connus sous le nom de *stress* tests ;
- validation du comportement des outils de surveillance (ou *monitoring* en terminologie anglo-saxonne), par exemple en simulant des pannes, et validation des solutions de maintenance, par exemple en générant des événements fictifs ;
- intégration, par itérations successives, d'équipements du cluster temporaire de production au cluster temporaire de migration lorsque ce dernier est validé (à chaque itération, un ensemble d'équipements peut être migré, par exemple un îlot de calcul) ; et,
- migration des nœuds de service du cluster temporaire de production au cluster temporaire de migration pour former le cluster final de production.

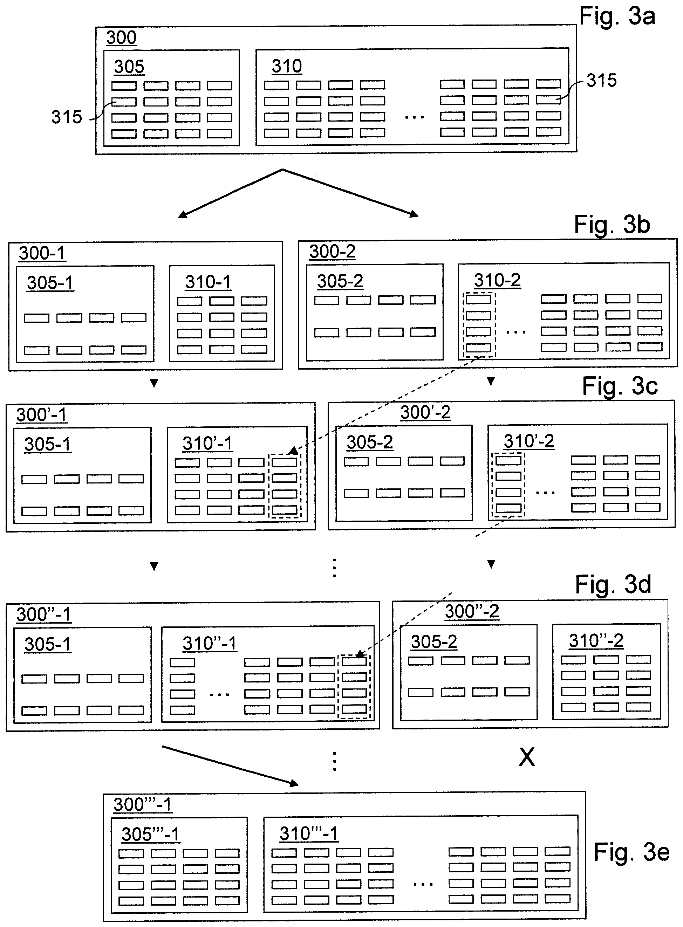

La figure 3, comprenant les figures 3a à 3e, illustre schématiquement la migration d'un cluster initial de production ayant un état technique logiciel d'un premier niveau vers un cluster final de production ayant un état technique logiciel d'un second niveau.

Le cluster initial de production 300, illustré sur la figure 3a, comprend un ensemble 305 de nœuds de service et un ensemble 310 de nœuds de calcul. Tous les nœuds sont ici génériquement référencés 315.

Comme représenté, l'ensemble des nœuds de service comprend seize nœuds. A titre d'illustration, cet ensemble comprend ici deux nœuds de gestion centralisée de type SPOM (acronyme de *Single Point Of Management* en terminologie anglo-saxonne), quatre nœuds de gestion distribuée de type MWS (sigle de *Management WorkStation* en terminologie anglo-saxonne), quatre nœuds de type passerelle réseau et six nœuds d'entrée/sortie (stockage partagé).

Conformément à l'invention, des équipements du cluster initial de production 300 sont assignés à un cluster temporaire de migration 300-1, les équipements restant formant un cluster temporaire de production 300-2, comme illustré sur la figure 3b. Le cluster temporaire de migration 300-1 et le cluster temporaire de production 300-2 comprennent chacun un ensemble de nœuds de service, notés 305-1 et 305-2, respectivement, et un ensemble de nœuds de calcul, notés 310-1 et 310-2, respectivement.

Dans cet exemple, la moitié des nœuds de service 305 du cluster initial de production 300 est affectée au cluster temporaire de migration 300-1, l'autre moitié étant utilisée par le cluster temporaire de production 300-2. Ainsi, l'ensemble des nœuds de service 305-1 du cluster temporaire de migration 300-1 et l'ensemble des nœuds de service 305-2 du cluster temporaire de production 300-2 comprennent chacun huit nœuds (un nœud de gestion de type SPOM, deux nœuds de gestion de type MWS, deux nœuds de type passerelle réseau et trois nœuds d'entrée/sortie). L'ensemble des nœuds de calcul 310-1 du cluster temporaire de migration 300-1 comprend ici neuf nœuds de calcul (les autres nœuds de calcul du cluster initial de production étant utilisés par le cluster temporaire de production 300-2).

Après que le cluster temporaire de migration 300-1 ait été validé, par exemple par rapport à un ensemble de tests donné, des équipements du cluster temporaire de production 300-2 sont affectés au cluster temporaire de migration 300-1. Ainsi, par exemple, comme illustré sur la figure 3c, trois nœuds de calcul de l'ensemble des nœuds de calcul 310-2 du cluster temporaire de production 300-2 sont affectés à l'ensemble des nœuds de calcul 310-1 du cluster temporaire de migration 300-1, appelé alors l'ensemble des nœuds de calcul 310'-1 du cluster temporaire de migration 300'-1, l'ensemble des nœuds de calcul 310-2 du cluster temporaire de production 300-2 étant alors appelé l'ensemble des nœuds de calcul 310'-2 du cluster temporaire de production 300'-2.

A nouveau, lorsque le cluster temporaire de migration 300'-1 a été validé, des équipements du cluster temporaire de production 300'-2 sont affectés au cluster temporaire de migration 300'-1 et ainsi de suite jusqu'à la configuration illustrée sur la figure 3d dans laquelle le cluster temporaire de production, appelé 300"-2, comprend un ensemble minimal de nœuds de calcul 310"-2 et dans laquelle le cluster temporaire de migration, appelé 300"-1, comprend un ensemble important de nœuds de calcul 310"-1.

A titre d'illustration, il est ici admit que le cluster temporaire de migration 300"-1 a atteint une taille critique par rapport à celle du cluster temporaire de production. Comme illustré sur la figure 3e, une migration est alors effectuée pour que le cluster temporaire de migration se transforme en cluster final de production, les équipements du cluster temporaire de production étant alors intégré au cluster final.

Comme illustré, le cluster final de production 300"'-1 comprend ici les nœuds de service des clusters temporaires de migration et de production, soit un ensemble 305"'-1 de seize nœuds (deux nœuds de gestion de type SPOM, quatre nœuds de gestion de type MWS, quatre nœuds de type passerelle réseau et six nœuds d'entrée/sortie). Le cluster final de production 300"'-1 comprend en outre un ensemble 310"'-1 de nœuds de calcul formé de tous les nœuds de calcul du cluster initial de production.

La figure 4 illustre schématiquement un exemple d'algorithme pour mettre à jour des éléments logiciels d'un cluster, optimisant la disponibilité de ce dernier, conformément à l'invention.

Une première étape (étape 400) a pour objet d'identifier précisément les équipements du cluster actuel de production (cluster initial ou temporaire de production), en particulier les nœuds, notamment les nœuds de service et les nœuds de calcul, qui doivent être affectés au cluster temporaire de migration.

Cette étape peut être réalisée par un opérateur ou de façon automatique à partir de règles prédéterminées.

A titre d'illustration, il peut être déterminé, au cours de cette étape, si un second nœud de gestion utilisé de façon redondante dans une solution de haute disponibilité doit être utilisé comme nœud de gestion dans le cluster temporaire de migration ou si un autre nœud doit être utilisé pour remplir sa fonction.

Les équipements tiers tels que les commutateurs utilisés, par exemple des commutateurs Ethernet ou Infiniband, et les systèmes d'alimentation électrique, par exemple les PDU (sigle de *Power Distribution Unit* en terminologie anglo-saxonne), sont également avantageusement identifiés afin d'établir un ensemble cohérent et fonctionnel. A titre d'illustration, il convient, de préférence, pour éviter des relations de dépendance, d'identifier un PDU relié à des nœuds identifiés pour être affectés au cluster temporaire de migration. De même, tous les éléments d'une armoire informatique (appelée *rack* en terminologie anglo-saxonne) sont avantageusement identifiés si des éléments de cette armoire informatique sont identifiés pour être affectés au cluster temporaire de migration (ces derniers dépendent typiquement d'une porte active de refroidissement dont dépendent également les autres éléments de la même armoire informatique qui ne devraient donc pas être séparés).

A ces fins, il convient d'identifier les relations entre les équipements afin de ne migrer que des ensembles cohérents et fonctionnels. Les liens entre les équipements tels que définis dans les données de configuration du cluster sont analysés pour déterminer s'il s'agit de liens « forts » ou de liens « faible ». A titre d'illustration, un lien « fort » est par exemple un lien unissant un nœud à un système d'alimentation électrique tandis qu'un lien « faible » est par exemple un lien logique entre deux nœuds. Contrairement aux liens « faibles », les liens « forts » sont des liens impératifs qui ne doivent pas être brisés lors de la migration signifiant ainsi que l'ensemble des équipements liés fortement doit être migré de façon groupée. Via les descriptions de chaque équipement du cluster et de ses liens, il est possible d'automatiser totalement l'analyse afin de créer des groupes de dépendances permettant d'assurer cette cohérence lors de la migration d'un ou plusieurs équipements.

Si un lien fort existe entre plusieurs équipements formant un groupe d'équipements et si un seul de ces équipements est identifié pour migrer, les équipements liés à ce dernier sont automatiquement migrés ou, alternativement, en fonction de règles prédéterminées ou du choix d'un utilisateur, cet équipement n'est pas migré, afin d'assurer la cohérence du groupe d'équipements.

La problématique liée aux équipements de stockage est similaire. Les systèmes de fichiers doivent être décomposés pour être utilisés par chacun des clusters temporaires ou par un seul selon les besoins.

Selon un mode de réalisation particulier, cette étape d'identification utilise une base de données référençant l'ensemble des équipements du cluster initial de production ainsi que leurs relations intrinsèques.

Des informations sont extraites de cette base de données pour identifier chaque équipement de façon unique. Ces informations sont, par exemple, un nom d'hôte, une adresse ou une liste d'adresses IP (sigle d'*Internet Protocol* en terminologie anglo-saxonne), une adresse ou une liste d'adresse MAC (acronyme de *Media Access Control* en terminologie anglo-saxonne), un type de réseau par adresse, une localisation physique et un type d'équipement.

Selon un mode de réalisation particulier, chaque équipement conserve l'identifiant qui lui est assigné dans le cluster initial de production (et qui est utilisé dans le cluster final de production). Alternativement, pour effectuer des tests du cluster temporaire de migration dans des conditions aussi réalistes que possible, les identifiants des équipements du cluster temporaire de migration sont modifiés pour correspondre à des équipements d'un cluster de production (cluster initial, temporaire ou final).

Bien que l'étape 400 vise des équipements du cluster actuel de production qui doivent être affectés au cluster temporaire de migration, il est possible de désigner des équipements par des ensembles d'équipements. Ainsi, par exemple, des nœuds peuvent être sélectionnés par la sélection d'un ou de plusieurs îlots.

Un outil permettant de garantir que les contraintes, par exemple les contraintes décrites précédemment en lien avec des PDU et des portes de refroidissement, sont respectées est avantageusement utilisé pour effectuer les identifications d'équipements ou pour contrôler les choix d'un opérateur. Il est également possible de définir des motifs (ou *patterns*) par défaut permettant la définition d'une décomposition d'un cluster initial en deux clusters selon des règles simples basées sur la topologie des réseaux et des contraintes physiques.

Après avoir identifié les équipements du cluster actuel de production qui doivent être affectés au cluster temporaire de migration, une étape suivante (étape 405) a pour objet d'initialiser la ségrégation des clusters temporaires de migration et de production.

Cette étape vise à masquer, dans le cluster actuel de production, chaque équipement précédemment identifié et à le démasquer (ou le rendre visible) dans le cluster temporaire de migration. En raison des modifications importantes qu'elle entraîne, cette étape est avantageusement effectuée dans un mode particulier offrant une sécurisation spécifique, par exemple un mode de maintenance, du cluster actuel de production.

Préalablement à l'exécution de cette étape, une étape de sauvegarde (non représentée sur la figure 4) peut être effectuée pour mémoriser la configuration globale actuelle. La sauvegarde peut ainsi être utilisée pour réintégrer les équipements précédemment identifiés dans le cluster actuel de production si un incident survenait.

Selon un mode de réalisation particulier, le masquage et le démasquage d'un équipement sont réalisés par l'intermédiaire de données de configuration des clusters temporaires. De telles données de configurations sont souvent regroupées au sein d'une base de données appelée *clusterDB.* Elles peuvent également être regroupées, par exemple, sous forme d'un ou de plusieurs fichiers. La *clusterDB* associée à chaque cluster temporaire est similaire à la *clusterDB* associée au cluster initial de production. Cependant, des équipements sont masqués dans les *clusterDBs* associées aux clusters temporaires.

Un indicateur est typiquement associé à chaque équipement dans la *clusterDB* pour définir son état. Il existe souvent des états appelés « *actif* », « *inactif* », « *géré* » et « *non géré* » pour caractériser des équipements. Un nouvel indicateur d'état appelé, par exemple, « masqué », peut ainsi être créé pour définir l'état masqué d'un équipement. L'absence de l'indicateur « masqué » signifie que l'équipement est visible et donc utilisable et gérable dans son cluster de référence. En d'autres termes, le marquage de l'identifiant d'un équipement avec l'état « masqué » indique ici que cet équipement est masqué tandis que le démarquage de son identifiant vise à indiquer que l'équipement est visible. A l'exception d'éventuels équipements partagés, par exemple des systèmes de fichiers, les *clusterDBs* associées aux clusters temporaires sont complémentaires (un équipement masqué dans la *clusterDB* d'un cluster temporaire, c'est-à-dire un équipement auquel est associé l'état « masqué », ne l'est pas dans celle de l'autre, c'est-à-dire que l'état « masqué » n'est pas associé à cet équipement dans cette dernière, et réciproquement). Un équipement masqué dans un cluster temporaire n'est plus accessible par ce dernier. Il n'est donc pas surveillé par celui-ci.

Lors de cette étape d'initialisation, les équipements préalablement identifiés sont reconfigurés, de façon automatique en fonction de la nouvelle configuration du cluster temporaire de production. Comme indiqué précédemment, cette étape peut requérir, pour certains équipements, par exemple les équipements identifiés, un mode particulier, par exemple un mode de maintenance. Pour reconfigurer certains éléments, par exemple des systèmes d'alimentation électrique, il peut être nécessaire d'arrêter d'autres éléments, par exemple des noeuds. Une telle étape de reconfiguration est effectuée de façon standard.

Les nœuds de service du cluster temporaire de migration sont alors, si cela n'a pas encore été effectué, c'est-à-dire si le cluster temporaire de migration n'a pas encore été « créé » (le cluster actuel de production est le cluster initial de production), installés (étape 410). Comme suggéré par l'utilisation de traits pointillés, cette étape n'est, de préférence, effectuée que lorsque le cluster initial de production est scindé en deux clusters temporaires et lors de la migration finale comme décrit ci-après.

Comme dans toute installation de clusters, il est nécessaire d'installer et configurer les nœuds de service en charge de la partie administration et de gestion des éléments des clusters temporaires avant de pouvoir les utiliser. Les deux clusters temporaires pouvant être logiquement totalement indépendants ou non (si certaines ressources telles que des systèmes de fichiers sont partagées), il existe plusieurs solutions, standard, pour la découverte et la configuration des équipements dans ces clusters. Quelque soit la solution retenue, il est souhaitable de s'assurer qu'aucun élément ne peut perturber le cluster temporaire de production. A ces fins, la désactivation logique de certaines branches du réseau, c'est-à-dire de certains ports des équipements réseau, peut s'avérer nécessaire et peut être réalisée automatiquement par rapport à l'étape précédente visant l'initialisation de la ségrégation des clusters temporaires.

Une vérification de l'indépendance logique entre les deux clusters temporaires peut être réalisée via des tests basiques sur les réseaux ainsi qu'au niveau des outils de surveillance.

A ce stade, il est possible, si un mode particulier tel qu'un mode de maintenance était requis, de revenir dans un mode normal.

S'ils ne l'ont pas été, les systèmes de fichiers utilisés pour le stockage sont ensuite déployés et configurés (étape 415). Comme suggéré par l'utilisation de traits pointillés, cette étape n'est avantageusement réalisée que lors de la scission du cluster initial de production en deux clusters temporaires et lors de la migration finale comme décrit ci-après. Selon la configuration des clusters temporaires, le déploiement et la configuration des systèmes de fichiers utilisés pour le stockage peuvent être réalisés de façon indépendante dans chacun des clusters temporaires ou de façon partagée. Que les systèmes de fichiers utilisés pour le stockage soient utilisés de façon indépendante ou partagée par les clusters temporaires, ils sont déployés et configurés de façon standard.

Les nœuds de calcul sont alors déployés et intégrés dans le cluster temporaire de migration (étape 420), de façon standard. Typiquement, la mise à jour logicielle visée par la migration est réalisée lors du déploiement et de l'intégration des nœuds de calcul. Cependant, si la mise à jour logicielle visée par la migration concerne (également ou indépendamment) d'autres équipements, par exemple les nœuds de service, la mise à jour logicielle correspondante est effectuée lors des phases d'installation et/ou de configuration correspondantes (notamment durant les étapes 410 et/ou 415).

Lorsque la configuration initiale du cluster temporaire de migration a été effectuée, une étape de validation de son fonctionnement et de vérification de ses performances est effectuée (étape 425). Les nouveaux éléments logiciels, à l'origine du processus de migration, sont testés, de préférence de façon quasi exhaustive, et leurs performances sont évaluées, de façon standard, pour les valider. Comme représenté, l'étape 425 est, de préférence, répétée autant de fois que nécessaire, jusqu'à ce que le cluster temporaire de migration puisse être considéré comme valide, avec différents tests et/ou avec différentes versions des éléments logiciels.

Lorsque le cluster temporaire de migration est considéré comme valide, des équipements du cluster temporaire de production peuvent être migrés progressivement de ce dernier vers le cluster temporaire de migration.

A ces fins, un test est effectué pour déterminer si une partie des équipements du cluster temporaire de production doit être migrée vers le cluster temporaire de migration (étape 430). Un tel test peut, par exemple, consister à déterminer si le cluster temporaire de migration a atteint une taille critique, de préférence prédéterminée, par rapport à celle du cluster temporaire de production, ou si une condition est remplie, par exemple si les résultats d'un ensemble de tests sont positifs.

Si une partie des équipements du cluster temporaire de production doit être migrée vers le cluster temporaire de migration, les étapes précédentes (étapes 400 à 425) sont répétées, de préférence à l'exception des étapes 410 et 415 comme indiqué précédemment (les nœuds de service et les systèmes de fichiers utilisés pour le stockage ont déjà été migrés), afin d'identifier les équipements devant être affectés au cluster temporaire de migration et de les intégrer à ce dernier.

Il est observé ici que les équipements possèdent généralement un mode utilisé pour les opérations de maintenance permettant de les arrêter après l'exécution d'une tâche courante. Ainsi, par exemple, les nœuds de calcul possèdent souvent un mode appelé *drain mode* qui permet de les arrêter après l'exécution de la tâche courante (aucune nouvelle tâche n'est affectée aux nœuds de calcul en mode *drain mode*). Ce mode peut être utilisé pour arrêter les nœuds du cluster temporaire de production identifiés pour être affectés au cluster temporaire de migration. Après qu'ils aient été arrêtés, ils peuvent être migrés comme décrit précédemment.

Au contraire, si le cluster temporaire de migration est considéré comme valide et si aucune partie des équipements du cluster temporaire de production ne doit être migrée vers le cluster temporaire de migration, il en est déduit que la phase de migration doit prendre fin et que le cluster final de production doit être configuré.

A ces fins, tous les équipements du cluster temporaire de production doivent être affectés au cluster final de production. Selon un mode de réalisation particulier, tous ces équipements sont affectés au cluster temporaire de migration qui devient le cluster final de production.

Selon ce mode de réalisation, tous les équipements du cluster temporaire de production sont identifiés (étape 435). Dans une étape suivante (étape 410'), l'ensemble des nœuds de service comprenant, par exemple, tous les nœuds de service du cluster temporaire de migration et tous les nœuds de service précédemment affectés au cluster temporaire de production, en charge de la partie administration et gestion des éléments du cluster final, est installé et configuré. Cette étape est ici similaire à l'étape 410 décrite précédemment.

Dans une étape suivante (étape 415'), les systèmes de fichiers utilisés pour le stockage sont déployés et configurés, de façon classique, en migrant d'abord les données (pour préserver les données client) avant de réaliser la mise à jour. A nouveau, les systèmes de fichiers utilisés pour le stockage sont ici les systèmes de fichiers utilisés dans le cluster temporaire de migration pour le stockage et les systèmes de fichiers précédemment affectés au cluster temporaire de production et utilisés pour le stockage. Cette étape, similaire à l'étape 415 décrite précédemment, peut être suivie d'une étape de validation (non représentée) ayant pour objet de valider l'installation et la configuration des nœuds de service et des systèmes de fichiers utilisés pour le stockage.

Les nœuds de calcul sont ensuite déployés et intégrés (étape 420'), de façon indépendante et standard. Cette étape, similaire à l'étape 420 décrite précédemment, peut être suivie d'une étape de validation (non représentée) permettant de vérifier l'intégration des nœuds de calcul.

Après une étape de finalisation de configuration (étape 440), le cluster temporaire de migration devient le cluster final de production. La finalisation de configuration comprend notamment la reconfiguration de l'ensemble des équipements tiers, notamment des commutateurs (*switch*) et des systèmes d'alimentation électrique (PDU).

Il est observé ici que le retrait d'un équipement de type nœud de calcul du cluster temporaire de production n'augmente pas substantiellement le risque de dysfonctionnement dans ce cluster. En effet, le retrait d'un équipement de type nœud de calcul consiste essentiellement en une manipulation des données de configuration du cluster (par exemple une *clusterDB*) pour masquer l'équipement retiré et en la reconfiguration des équipements du cluster (par exemple des nœuds de service et de calcul, des systèmes de fichiers utilisés pour le stockage et des PDUs associés) afin que cet équipement disparaisse du cluster temporaire de production et apparaisse dans le cluster temporaire de migration.

En d'autres termes, à titre d'illustration, lorsqu'un équipement du type nœud de calcul du cluster temporaire de production est affecté au cluster temporaire de migration, la *clusterDB* du cluster temporaire de production est modifiée pour masquer l'équipement, la nouvelle configuration (sans l'équipement considéré, c'est-à-dire masqué) est déployée dans le cluster temporaire de production, la *clusterDB* du cluster temporaire de migration est modifiée pour démasquer l'équipement considéré et la nouvelle configuration (comprenant l'équipement considéré) est déployée dans le cluster temporaire de migration.

Comme décrit précédemment, une alternative à la phase d'intégration de l'ensemble du cluster temporaire de production dans le cluster temporaire de migration pour former le cluster final de production consiste à mettre à jour le cluster temporaire de production avec la nouvelle version logicielle testée dans le cluster temporaire de migration afin d'éviter une reconfiguration de l'ensemble des équipements tiers.

Ce mode de réalisation ne vise donc pas à basculer l'ensemble du cluster temporaire de production dans le cluster de migration mais à permettre une réinstallation du cluster temporaire de production avec la nouvelle version logicielle testée dans le cluster temporaire de migration et à réintégrer les éléments du cluster temporaire de migration dans le cluster temporaire de production qui devient alors le cluster final de production.

Les étapes du procédé selon l'invention, en particulier les étapes nécessitant une interaction entre les clusters temporaires de production et de migration, notamment les étapes décrites précédemment d'identification d'équipements et de contraintes, d'initialisation de ségrégation, de configuration de stockage et/ou de test d'intégration de nouveaux équipements dans le cluster temporaire de migration peuvent être effectuées dans les clusters temporaires ou dans un système tiers, par exemple un ordinateur ou une station de travail ayant une architecture similaire à celle décrite en référence à la figure 2, connecté au cluster initial de production et, par conséquent, aux clusters temporaires.

Selon un mode de réalisation particulier, les actions correspondant à ces étapes sont effectuées dans un cluster temporaire puis dans l'autre avec, comme garantie de cohérence, un outil permettant de constater qu'il y a conformité entre les éléments actifs (équipements démasqués) d'un cluster temporaire et les éléments inactifs (équipements masqués) de l'autre cluster temporaire. Un lien entre les noeuds de service utilisés pour la gestion centralisée, en charge des données de configuration des clusters temporaires (*clusterDBs*), peut être réalisé via l'infrastructure principale du réseau du cluster initial (appelée *backbone* en terminologie anglo-saxonne). Bien qu'une telle solution ne permette pas d'isoler parfaitement, d'un point de vue logique, les clusters temporaires, elle est simple à mettre en oeuvre et, combinée avec des outils de surveillance, offre une sécurité suffisante dans de nombreux cas.

Naturellement, pour satisfaire des besoins spécifiques, une personne compétente dans le domaine de l'invention pourra appliquer des modifications dans la description précédente.

## Revendications

1. Procédé de mise à jour logicielle d'éléments dans une pluralité d'équipements (315) d'un cluster pour migrer un cluster initial (300) ayant un état technique logiciel d'un premier niveau vers un cluster final (300"'-1) ayant un état technique logiciel d'un second niveau, ce procédé étant **caractérisé en ce que** ledit cluster initial est scindé en un cluster temporaire de migration (300-1, 300'-1, 300"-1) et un cluster temporaire de production (300-2, 300'-2, 300"-2) durant l'exécution du procédé et **en ce qu'**il comprend :
- une phase de migration comprenant les étapes suivantes,
- identification (400) d'un ensemble d'équipements de ladite pluralité d'équipements, ledit ensemble d'équipements identifié comprenant au moins un équipement ou des équipements avec des liens de dépendance ;
- affectation (405) des équipements dudit ensemble d'équipements identifié, audit cluster temporaire de migration et mise à jour logicielle d'au moins un élément d'au moins un équipement dudit ensemble d'équipements, ledit cluster temporaire de production comprenant les équipements de ladite pluralité d'équipements à l'exception des équipements de ladite pluralité d'équipements affectés audit cluster temporaire de migration, lesdits clusters temporaires de migration et de production étant logiquement indépendant ;
- test de validité (425) dudit cluster temporaire de migration, ledit test comprenant au moins un test de validation des performances de calcul dudit cluster temporaire de migration ; et, lorsque ledit cluster temporaire de migration est considéré comme valide lors du test de validité (425) :
- test d'intégration (430) pour déterminer si une partie des équipements du cluster temporaire de production doit être migrée vers le cluster temporaire de migration validé, ledit test d'intégration comprenant les étapes suivantes :
- mesure d'une taille dudit cluster temporaire de migration ;
- comparaison de la taille mesurée du cluster temporaire de migration à une taille critique prédéterminée, de sorte que :
- si la taille du cluster temporaire de migration est inférieure à la taille critique, une nouvelle phase de migration comprenant lesdites étapes d'identification (400) d'un ensemble d'équipements, d'affectation (405) d'équipements et de test de validité (425) dudit cluster temporaire de migration est mise en œuvre ; et
- dans les autres cas, la phase de migration est terminée ;
- une phase de configuration (440) dudit cluster final de production comprenant la formation de ce cluster final à partir dudit cluster temporaire de migration validé et du cluster temporaire de production.

2. Procédé selon la revendication 1 dans lequel la taille critique du cluster temporaire de migration est prédéterminée en fonction de la taille du cluster temporaire de production lors de la phase de migration en cours.

3. Procédé selon la revendication 1 ou la revendication 2, la phase de migration comprenant en outre une étape de vérification de cohérence visant au moins un équipement dudit ensemble d'équipements identifié, pour vérifier qu'un équipement de ladite pluralité d'équipements ayant un lien de dépendance avec ledit équipement visé par ladite vérification de cohérence appartient audit ensemble d'équipements, ledit lien de dépendance vérifiant une caractéristique prédéterminée.

4. Procédé selon la revendication 3, la phase de migration comprenant en outre une étape d'ajout audit ensemble d'équipements identifié dudit équipement de ladite pluralité d'équipements ayant un lien de dépendance avec ledit équipement visé par ladite vérification de cohérence si ledit équipement de ladite pluralité d'équipements ayant un lien de dépendance avec ledit équipement visé par ladite vérification de cohérence n'appartient pas audit ensemble d'équipements identifié.

5. Procédé selon l'une quelconque des revendications 1 à 4, la phase de configuration (440) comprenant en outre une étape de mise à jour logicielle d'au moins un élément d'au moins un équipement dudit cluster temporaire de production pour configurer ledit cluster final de production.

6. Procédé selon l'une quelconque des revendications 1 à 5 selon lequel ladite phase de configuration dudit cluster final de production comprend une étape d'intégration d'au moins un équipement dudit cluster temporaire de production, comprenant au moins un élément mis à jour, dans ledit cluster temporaire de migration, ledit cluster temporaire de migration ainsi obtenu formant ledit cluster final de production.

7. Procédé selon la revendication 5 selon lequel ladite phase de configuration dudit cluster final de production comprend une étape d'intégration d'au moins un équipement dudit cluster temporaire de migration dans ledit cluster temporaire de production, ledit cluster temporaire de production ainsi obtenu formant ledit cluster final de production.

8. Procédé selon l'une quelconque des revendications précédentes selon lequel ladite étape d'affectation des équipements dudit ensemble d'équipements audit cluster temporaire de migration comprend une étape de marquage d'un identifiant des équipements dudit ensemble d'équipements dans des données de configuration dudit cluster temporaire de production.

9. Procédé selon l'une quelconque des revendications précédentes selon lequel ladite étape d'affectation des équipements dudit ensemble d'équipements audit cluster temporaire de migration comprend une étape de démarquage d'un identifiant des équipements dudit ensemble d'équipements dans des données de configuration dudit cluster temporaire de migration.

10. Procédé selon l'une quelconque des revendications précédentes comprenant en outre une étape de configuration (410, 410') d'au moins un équipement de gestion dudit cluster temporaire de migration.

11. Procédé selon l'une quelconque des revendications précédentes comprenant en outre une étape de configuration (415, 415') d'au moins un système de fichiers utilisé pour le stockage, partagé entre ledit cluster temporaire de production et ledit cluster temporaire de migration.

12. Procédé selon l'une quelconque des revendications précédentes selon lequel lesdits équipements dudit ensemble d'équipements identifié sont des nœuds.

13. Programme d'ordinateur comprenant des instructions adaptées à la mise en œuvre de chacune des étapes du procédé selon l'une quelconque des revendications précédentes lorsque ledit programme est exécuté sur un ordinateur.

14. Dispositif comprenant des moyens adaptés à la mise en œuvre de chacune des étapes du procédé selon l'une quelconque des revendications 1 à 12.

## Patentansprüche

1. Verfahren zur Softwareaktualisierung von Elementen in mehreren Ausrüstungen (315) eines Clusters, um einen Anfangscluster (300), der einen technischen Softwarezustand einer ersten Ebene hat, zu einem Endcluster (300"'-1) wandern zu lassen, der einen technischen Softwarezustand einer zweiten Ebene hat, wobei dieses Verfahren **dadurch gekennzeichnet ist, dass** der Anfangscluster während der Ausführung des Verfahrens in einen temporären Migrationscluster (300-1, 300'-1, 300' '-1) und einen temporären Produktionscluster (300-2, 300'-2, 300"-2) aufgeteilt wird, und dass es umfasst:
- eine Migrationsphase, welche die folgenden Schritte umfasst,
- Identifikation (400) einer Einheit von Ausrüstungen der mehreren Ausrüstungen, wobei die identifizierte Einheit von Ausrüstungen mindestens eine Ausrüstung oder Ausrüstungen mit Abhängigkeitsverbindungen umfasst:
- Zuordnung (405) der Ausrüstungen der identifizierten Einheit von Ausrüstungen zum temporären Migrationscluster und Softwareaktualisieren mindestens eines Elements mindestens einer Ausrüstung der Einheit von Ausrüstungen, wobei der temporäre Produktionscluster die Ausrüstungen der mehreren Ausrüstungen mit Ausnahme der Ausrüstungen der mehreren Ausrüstungen umfasst, die dem temporären Migrationscluster zugeordnet sind, wobei die temporären Migrations- und Produktionscluster logisch unabhängig sind;
- Validitätstest (425) des temporären Migrationsclusters, wobei der Test mindestens einen Validationstest der Rechenleistungen des temporären Migrationsclusters umfasst; und, wenn der temporäre Migrationscluster beim Validitätstest (425) als valide erachtet wird:
- Integrationstest (430), um zu bestimmen, ob ein Teil der Ausrüstungen des temporären Produktionsclusters zum validierten temporären Migrationscluster wandern soll, wobei der Integrationstest die folgenden Schritte umfasst:
- Messen einer Größe des temporären Migrationsclusters;
- Vergleichen der gemessenen Größe des temporären Migrationsclusters mit einer vorbestimmten kritischen Größe, derart, dass:
- wenn die Größe des temporären Migrationsclusters kleiner ist als die kritische Größe, eine neue Migrationsphase durchgeführt wird, welche die Schritte der Identifikation (400) einer Einheit von Ausrüstungen, der Zuordnung (405) von Ausrüstungen und des Validitätstests (425) des temporären Migrationsclusters umfasst; und
- in den anderen Fällen die Migrationsphase beendet wird;
- eine Konfigurationsphase (440) des Produktionsendclusters, welche die Ausbildung dieses Endclusters aus dem validierten temporären Migrationscluster und dem temporären Produktionscluster umfasst.

2. Verfahren nach Anspruch 1, wobei die kritische Größe des temporären Migrationsclusters in Abhängigkeit von der Größe des temporären Produktionsclusters bei der im Gange befindlichen Migrationsphase vorbestimmt wird.

3. Verfahren nach Anspruch 1 oder Anspruch 2, wobei die Migrationsphase darüber hinaus einen Schritt der Kohärenzverifikation umfasst, der auf mindestens eine Ausrüstung der identifizierten Einheit von Ausrüstungen abzielt, um zu verifizieren, dass eine Ausrüstung der mehreren Ausrüstungen, die eine Abhängigkeitsverbindung mit der Ausrüstung hat, auf die durch die Kohärenzverifikation abgezielt wird, zu der Einheit von Ausrüstungen gehört, wobei die Abhängigkeitsverbindung ein vorbestimmtes Charakteristikum verifiziert.

4. Verfahren nach Anspruch 3, wobei die Migrationsphase darüber hinaus einen Schritt des Hinzufügens zu der identifizierten Einheit von Ausrüstungen der Ausrüstung der mehreren Ausrüstungen umfasst, die eine Abhängigkeitsverbindung mit der Ausrüstung hat, auf die durch die Kohärenzverifikation abgezielt wird, wenn die Ausrüstung der mehreren Ausrüstungen, die eine Abhängigkeitsverbindung mit der Ausrüstung hat, auf die durch die Kohärenzverifikation abgezielt wird, nicht zu der identifizierten Einheit von Ausrüstungen gehört.

5. Verfahren nach einem der Ansprüche 1 bis 4, wobei die Konfigurationsphase (440) darüber hinaus einen Softwareaktualisierungsschritt mindestens eines Elements mindestens einer Ausrüstung des temporären Produktionsclusters umfasst, um den Produktionsendcluster zu konfigurieren.

6. Verfahren nach einem der Ansprüche 1 bis 5, wobei die Konfigurationsphase des Produktionsendclusters einen Schritt der Integration mindestens einer Ausrüstung des temporären Produktionsclusters, der mindestens ein Aktualisierungselement umfasst, in den temporären Migrationscluster umfasst, wobei der so erhaltene temporäre Migrationscluster den Produktionsendcluster bildet.

7. Verfahren nach Anspruch 5, wobei die Konfigurationsphase des Produktionsendclusters einen Schritt der Integration mindestens einer Ausrüstung des temporären Migrationsclusters in den temporären Produktionscluster umfasst, wobei der so erhaltene temporäre Produktionscluster den Produktionsendcluster bildet.

8. Verfahren nach einem der vorhergehenden Ansprüche, wobei der Schritt der Zuordnung der Ausrüstungen der Einheit von Ausrüstungen zum temporären Migrationscluster einen Schritt der Markierung einer Kennung der Ausrüstungen der Einheit von Ausrüstungen in Konfigurationsdaten des temporären Produktionsclusters umfasst.

9. Verfahren nach einem der vorhergehenden Ansprüche, wobei der Schritt der Zuordnung der Ausrüstungen der Einheit von Ausrüstungen zum temporären Migrationscluster einen Schritt der Entmarkierung einer Kennung der Ausrüstungen der Einheit von Ausrüstungen in Konfigurationsdaten des temporären Migrationsclusters umfasst.

10. Verfahren nach einem der vorhergehenden Ansprüche, darüber hinaus einen Schritt der Konfiguration (410, 410') mindestens einer Steuerungsausrüstung des temporären Migrationsclusters umfassend.

11. Verfahren nach einem der vorhergehenden Ansprüche, darüber hinaus einen Schritt der Konfiguration (415, 415') mindestens eines zur Speicherung verwendeten Dateiensystems umfassend, das vom temporären Produktionscluster und temporären Migrationscluster gemeinsam genutzt wird.

12. Verfahren nach einem der vorhergehenden Ansprüche, wobei die Ausrüstungen der identifizierten Einheit von Ausrüstungen Knoten sind.

13. Computerprogramm, das Anweisungen umfasst, die zur Ausführung jedes der Schritte des Verfahrens nach einem der vorhergehenden Ansprüche angepasst ist, wenn das Programm auf einem Computer abläuft.

14. Vorrichtung, die Mittel umfasst, die zur Ausführung jedes der Schritte des Verfahrens nach einem der Ansprüche 1 bis 12 angepasst ist.

## Claims

1. Method of software updating of elements in a plurality of equipment items (315) of a cluster to migrate an initial cluster (300) having a software technical state with a first level to a final cluster (300"'-1) having a software technical state with a second level, this method being **characterized in that** said initial cluster is split into a migration temporary cluster (300-1, 300'-1, 300"-1) and a production temporary cluster (300-2, 300'-2, 300"-2) during the execution of the method and **in that** it comprises:
- performing a migration phase comprising the following steps,
- identifying (400) a set of equipment items of said plurality of equipment items, said identified set of equipment items comprising at least one equipment item or equipment items with dependency links.
- allocating (405) the equipment items of said identified set of equipment items, to said migration temporary cluster and software updating at least one element of at least one equipment item of said set of equipment items, said production temporary cluster comprising the equipment items of said plurality of equipment items with the exception of the equipment items of said plurality of equipment items allocated to said migration temporary cluster, said migration and production temporary clusters being logically independent;
- performing (425) a validity test of said migration temporary cluster, said validity test comprising at least one validation test for validating computing performance of said migration temporary cluster; and, when said migration temporary cluster is considered as valid on performing the validity test (425):
- performing an integration test (430) to determine whether some of the equipment items of the production temporary cluster must be migrated to the validated migration temporary cluster, said integration test comprising the following steps:
- measuring a size of said migration temporary cluster;
- comparing the measured size of the migration temporary cluster with a predetermined critical size, such that:
- if the size of the migration temporary cluster is less than the critical size, a new migration phase is implemented comprising said steps of identifying (400) a set of equipment items, allocating (405) equipment items and performing (425) a validity test of said migration temporary cluster; and
- in the other cases, the migration phase is terminated;
- performing a configuration phase (440) of said production final cluster comprising forming that final cluster from said validated migration temporary cluster and the production temporary cluster.

2. Method according to claim 1, wherein the critical size of the migration temporary cluster is predetermined according to the size of the production temporary cluster on performing the migration phase in course.

3. Method according to claim 1 or claim 2, the migration phase further comprising a step of consistency verification directed to at least one equipment item of said identified set of equipment items, to verify that an equipment item of said plurality of equipment items having a dependency link with said equipment item to which said consistency verification is directed belongs to said set of equipment items, said dependency link verifying a predetermined characteristic.

4. Method according to claim 3, the migration phase further comprising a step of adding said equipment item of said plurality of equipment items having a dependency link with said equipment item to which said consistency verification is directed to said identified set of equipment items if said equipment item of said plurality of equipment items having a dependency link with said equipment item to which said consistency verification is directed does not belong to said identified set of equipment items.

5. Method according to any one of claims 1 to 4, the configuration phase (440) further comprising a step of software updating of at least one element of at least one equipment item of said production temporary cluster to configure said production final cluster.

6. Method according to any one of claims 1 to 5 wherein said configuration phase of said production final cluster comprises a step of integrating at least one equipment item of said production temporary cluster, comprising at least one updated element, in said migration temporary cluster, said migration temporary cluster so obtained forming said production final cluster.

7. Method according to claim 5, in which said configuration phase of said production final cluster comprises a step of integrating at least one equipment item of said migration temporary cluster in said production temporary cluster, said production temporary cluster so obtained forming said production final cluster.

8. Method according to any one of the preceding claims in which said step of allocating equipment items of said set of equipment items to said migration temporary cluster comprises a step of marking an identifier of the equipment items of said set of equipment items in configuration data of said production temporary cluster.

9. Method according to any one of the preceding claims in which said step of allocating equipment items of said set of equipment items to said migration temporary cluster comprises a step of unmarking an identifier of the equipment items of said set of equipment items in configuration data of said migration temporary cluster.

10. Method according to any one of the preceding claims further comprising a step of configuring (410, 410') at least one management equipment item of said migration temporary cluster.

11. Method according to any one of the preceding claims further comprising a step of configuring (415, 415') at least one file system used for storage, shared between said production temporary cluster and said migration temporary cluster.

12. Method according to any one of the preceding claims in which said equipment items of said identified set of equipment items are nodes.

13. Computer program comprising instructions configured for the carrying out of each of the steps of the method according to any one of the preceding claims when said program is executed on a computer.

14. Device comprising means adapted for the implementation of each of the steps of the method according to any one of claims 1 to 12.
